# EUROPEAN PATENT SPECIFICATION

(11) **EP 2 950 185 B1**
(45) Date of publication and mention of the grant of the patent: **13.03.2019**
(21) Application number: 15167593.1
(22) Date of filing: 13.05.2015
(51) Int. Cl.: G06F 3/0488, G06F 3/023, G06F 3/0481, G06F 3/0484, G06F 17/24

(54) **METHOD FOR CONTROLLING A VIRTUAL KEYBOARD AND ELECTRONIC DEVICE IMPLEMENTING THE SAME**
VERFAHREN ZUR STEUERUNG EINER VIRTUELLEN TASTATUR UND ELEKTRONISCHE VORRICHTUNG ZUR UMSETZUNG DES VERFAHRENS
PROCÉDÉ DE COMMANDE DE CLAVIER VIRTUEL ET DISPOSITIF ÉLECTRONIQUE METTANT EN OEUVRE CELUI-CI

(30) Priority: 29.05.2014 KR 20140065486
(43) Date of publication of application: 02.12.2015
(73) Proprietor: Samsung Electronics Co., Ltd., Gyeonggi-do 443-742 (KR)
(72) Inventor: Oldziejewski, Marcin, 443-742 Gyeonggi-do (KR); Komlev, Anton, 443-742 Gyeonggi-do (KR); Lukaszewski, Filip, 443-742 Gyeonggi-do (KR)
(74) Representative: HGF Limited

(56) References cited:
- EP-A1- 2 660 699
- US-A1- 2010 333 027
- US-A1- 2012 287 061
- US-A1- 2013 067 383

## Description

### TECHNICAL FIELD

The present disclosure relates to a method for controlling a virtual keyboard and an electronic device implementing the same.

### BACKGROUND

Recent electronic devices, especially, portable electronic devices have been implemented as multimedia devices that adopt various functions, such as taking photographs or videos, reproducing music files or video files, games, receiving broadcast, supporting the wireless Internet, or the like. The electronic devices provide a 3*4 keyboard or a QWERTY keyboard as a virtual (or soft) keyboard on a touch screen in order to execute various functions.

Meanwhile, the virtual keyboard includes a backspace key for deleting input text. In the virtual keyboard according to the prior art, when a user touches the backspace key once, one letter is deleted. In addition, when the user keeps pressing the backspace key for a certain time, a text deletion speed is increased in proportion to the pressing time of the backspace.

According to the related art, when a user presses the backspace key of the virtual keyboard for a certain time, text may be deleted very rapidly or entire text may be deleted. In addition, text may not be deleted at a high speed until the backspace key is pressed for a certain time, so it takes time to delete the text fast.

Furthermore, according to the related art, after deleting text, the deleted text should be input again in order to restore (or recover) the same.

Therefore, a need exists for a method for controlling a virtual keyboard to accurately and rapidly delete input text and an electronic device for implementing the method.

The above information is presented as background information only to assist with an understanding of the present disclosure. No determination has been made, and no assertion is made, as to whether any of the above might be applicable as prior art with regard to the present disclosure.

US-2013/067383-A1 discloses a method of receiving, by a computing device having one or more processors and a presence-sensitive interface, an indication of a first user gesture to select an icon of a graphical keyboard displayed by the presence-sensitive interface, and receiving, by the computing device, an indication of a second user gesture that indicates a rate of execution of a function associated with the selected icon. The computing device may execute the function associated with the selected icon at an execution rate based on the indicated rate of execution.

US-2012/287061-A1 discloses a method of providing a graphic user interface (GUI) having an item deleting function includes displaying at least one item, detecting a touch position moving operation after a touch input is entered from a user and deleting the at least one item located on a moving path of the touch position moving operation.

EP-2660699-A1 discloses a touchscreen keyboard with correction of previously input text. A method for correcting text input on an electronic device is described. The method comprises: displaying a virtual keyboard on a touchscreen, the virtual keyboard including a plurality of keys; receiving input from the virtual keyboard; displaying received input in an input field displayed on the touchscreen; and deleting a previous set of characters in the input field when a delete touch gesture is detected in association with a designated key in the virtual keyboard.

U-S201/0333027-A1 discloses a device providing a delete slider icon, that receives one or more characters, and selects a delete function from multiple delete functions, based on user activity associated with the delete slider icon. The device also deletes a single character of the one or more characters when a tap on the delete slider icon is detected, deletes one or more of the one or more characters when the delete slider icon is dragged over the one or more characters and released, and deletes all of the one or more characters when a flicking of the delete slider icon is detected.

### SUMMARY

An aim of certain embodiments of the present invention is to provide a method for controlling a virtual keyboard to accurately and rapidly delete input text and an electronic device for implementing the method.

In accordance with an embodiment of the present disclosure, a method for controlling a virtual keyboard of an electronic device is provided. The method comprises: displaying the virtual keyboard; displaying text inputted through the virtual keyboard; receiving a first touch input signal that is created by touching a text delete function key included in the displayed virtual keyboard; displaying the text delete function key to be enlarged, based on the first touch input signal, wherein the enlarged key comprises a slide bar and a slider; receiving a second touch input signal moving the slider on the slide bar; if the slider is moved from a reference position configured to be on the slide bar toward one end of the slide bar, based on the second touch input signal, configuring a direction for deleting the text positioned on the left of a cursor, if the slider is moved from a reference position configured to be on the slide bar toward the other end of the slide bar, based on the second touch input signal, configuring a direction for deleting the text positioned on the right of the cursor, and deleting the text according to the configured direction.

In accordance with another embodiment of the present disclosure, an electronic device is provided. The electronic device comprises: an input unit; a touch screen; and a controller configured: to control the touch screen to display a virtual keyboard, to display text inputted through the virtual keyboard or the input unit; to receive a first touch input signal that is created by touching a text delete function key included in the displayed virtual keyboard; to control the touch screen to display the text delete function key to be enlarged based on the first touch input signal, wherein the enlarged key comprises a slide bar and a slider; to receive a second touch input signal moving the slider on the slide bar; to configure a direction for deleting the text positioned on the left of a cursor, if the slider is moved from a reference position configured to be on the slide bar toward one end of the slide bar, based on the second touch input signal, and to make a control to delete the text according to the configured direction. Preferred embodiments are defined in the dependent claims.

The method for controlling a virtual keyboard and the electronic device for implementing the method, according to various embodiments of the present disclosure, can support to delete input text accurately and rapidly.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a block diagram of an electronic device according to various embodiments of the present disclosure;
FIG. 2 is a flowchart illustrating a method for controlling a virtual keyboard of an electronic device according to an embodiment of the present disclosure;
FIGS. 3A, 3B, and 3C illustrate a delete function key that is displayed to be enlarged according to various embodiments of the present disclosure;
FIGS. 4A, 4B, and 4C illustrate a function of a delete function key according to various embodiments of the present disclosure;
FIGS. 5A and 5B illustrate a method for controlling a virtual keyboard of an electronic device according to various embodiments of the present disclosure;
FIG. 6 is a flowchart illustrating a method for controlling a virtual keyboard of an electronic device according to an embodiment of the present disclosure;
FIG. 7 illustrates a function of a delete function key of an electronic device according to an embodiment of the present disclosure;
FIGS. 8A, 8B, and 8C illustrate a method for controlling a virtual keyboard of an electronic device according to various embodiments of the present disclosure;
FIG. 9 is a flowchart illustrating a method for controlling a virtual keyboard of an electronic device according to an example of the present disclosure;
FIG. 10 illustrates a function of a delete function key of an electronic device according to an embodiment of the present disclosure; and
FIGS. 11A, 11B, and 11C illustrate a method for controlling a virtual keyboard of an electronic device according to various examples of the present disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

Embodiments of the present disclosure provide a method for controlling a virtual keyboard to accurately and rapidly delete input text and an electronic device for implementing the method.

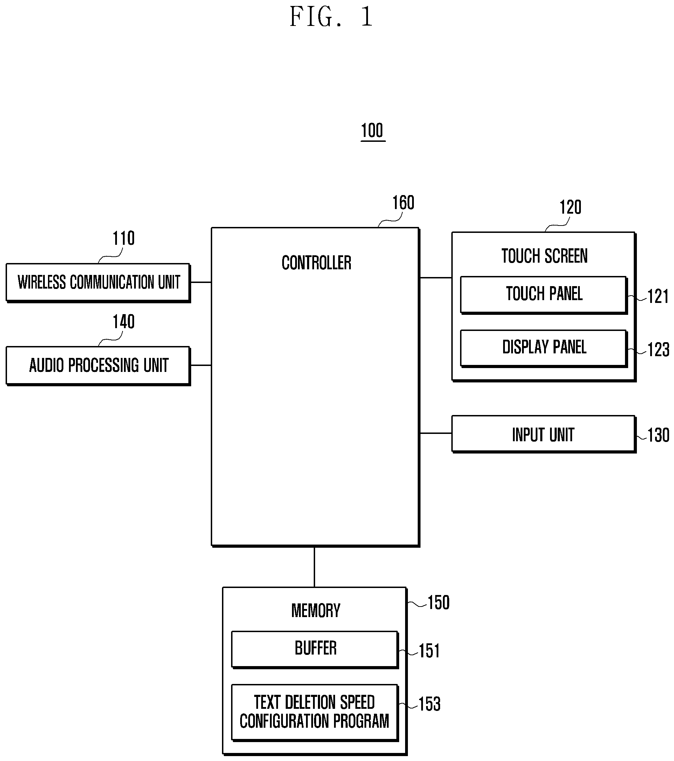

FIG. 1 is a block diagram of an electronic device according to various embodiments of the present disclosure.

Referring to FIG. 1, an electronic device 100 may include a wireless communication unit 110, a touch screen 120, an audio processing unit 140, an input unit 130, a memory 150, a controller 160, or the like.

The wireless communication unit 110 may form certain communication channels with supportable networks (e.g., mobile communication networks) under the control of the controller 160, and may transmit and receive signals related to wireless communication, such as voice communication, and video communication, and data communication based on message services, such as a short message service (SMS), a multimedia message service (MMS), the Internet, or the like.

In addition, the wireless communication unit 110 may include a transmitting/receiving unit for modulating and amplifying a frequency of a signal to be transmitted, and for low-noise-amplifying and demodulating a frequency of a received signal. The wireless communication unit 110 may form a data communication channel for a message service to thereby process message service-based data transmission/reception under the control of the controller 160. Here, the communication channel may include mobile communication channels, such as, Code Division Multiple Access (CDMA), Time DMA (TDMA), Orthogonal Frequency-DMA (OFDMA), or the like, and Internet communication channels, such as wired Internet networks, wireless Internet networks, or the like. In the case where the electronic device 100 does not support communication functions, the wireless communication unit 110 may be omitted.

The touch screen 120 may provide various images necessary for the operation of the electronic device 100. For example, the touch screen 120 may support a standby image, or a menu image, which are necessary for the operation of the electronic device 100. The touch screen 120 may include a touch panel 121 and a display panel 123. The touch panel 121 may be implemented by an add-on type in which the touch panel is placed on the display panel 123, or by an in-cell type in which the touch panel is inserted into the display panel 123.

The touch panel 121 may create touch input signals in response to user gestures on a screen, and may convert the created analog touch input signal into a digital signal to be thereby transferred to the controller 160. The touch panel 121 may be a combined touch panel that is comprised of a hand touch panel for detecting hand gestures and a pen touch panel for detecting pen gestures. Here, the hand touch panel may be implemented as a capacitive type. Alternatively, the hand touch panel may be implemented as a resistive type, an infrared type, or an ultrasonic type.

In an embodiment of the present disclosure, when the user touches a delete function key, such as a backspace key or a delete key, of a virtual keyboard, the touch panel 121 may create a touch input signal corresponding to the touch and may transfer the same to the controller 160. In an embodiment of the present disclosure, the backspace key usually deletes text positioned on the left of a cursor that is displayed on the screen or in a text input window. The delete key usually deletes text positioned on the right of a cursor displayed on the screen or in a text input window.

In an embodiment of the present disclosure, when the user drags a touch on the delete function key of the virtual keyboard while the touch on the delete function key is maintained, the touch panel 121 may create a touch input signal corresponding to the drag input to be thereby transferred to the controller 160.

The display panel 123 may display data under the control of the controller 160. For example, when the controller 160 processes (e.g., decodes) data and stores the processed data in the buffer 151, the display panel 123 may convert the data stored in the buffer 151 into analog signals and may display the same on the screen.

In an embodiment of the present disclosure, the display panel 123 may display input text under the control of the controller 160. For example, if the user inputs text using the virtual keyboard or using functions of copying or cutting off the text from other electronic documents, the display panel 123 may display the text. In another embodiment of the present disclosure, if the user inputs text using an automatic completion function, i.e., by selecting a keyword displayed on the screen, the display panel 123 may display the input text. However, the present disclosure is not limited thereto, and it may adopt various methods for inputting and displaying text on the screen.

In an embodiment of the present disclosure, if the user maintains the touch on the delete function key for a certain time, the display panel 123 may display an enlarged delete function key under the control of the controller 160. In an embodiment of the present disclosure, the enlarged delete function key may include a slider or a slide bar for configuring a text deletion speed.

In an embodiment of the present disclosure, when the user deletes the input text using the delete function keys, the display panel 123 may display the remaining text after deleting the input text under the control of the controller 160. In another example of the present disclosure, if the user restores (or recovers) the deleted text using the delete function key, the display panel 123 may display the restored text.

The display panel 123 may be comprised of a liquid crystal display (LCD), an active matrix organic light emitted diode (AMOLED), a passive matrix organic light emitted diode (PMOLED), a flexible display, or a transparent display.

The input unit 130 may create various input signals necessary for the operation of the electronic device 100. The input unit 130 may be formed as a specific key, such as a button key, a side key, a home key, or the like. The input unit 130 may be provided as a virtual keyboard to support a full touch screen 120. The virtual keyboard may be displayed on the touch screen 120 to create input signals in response to user touches. The input unit 130 may create an input signal for calling the virtual keyboard and an input signal for removing the virtual keyboard from the touch screen, by user inputs. In an embodiment of the present disclosure, in the case where the touch screen 120 supports an input function, the touch screen 120 may operate as the input unit 130.

The audio processing unit 140 may process various audio signals generated in the course of the operation of the electronic device 100. For example, the audio processing unit 140 may include a speaker (SPK) to output audio signals that are created or decoded in the electronic device 100. The audio processing unit 140 may include a microphone (MIC) for collecting audio signals in order to provide functions of voice calls, video calls, or audio recording. In an embodiment of the present disclosure, when touch input signals for selecting specific keys is created in the course of controlling the virtual keyboard, the audio processing unit 140 may support output of sound effects in response to the touch input signals.

For example, when a touch input signal for the delete function key included in the virtual keyboard is created, the audio processing unit 140 may support output of a sound effect corresponding to the created touch input signal, which is different from sound effects corresponding to touch input signals for other keys. In another embodiment of the present disclosure, when the text deletion speed is configured according to a touch input signal, for example, a drag input signal, with respect to the delete function key, the audio processing unit 140 may output a guide sound related to the configuration of the text deletion speed. The output of the sound effects or guide sounds may be omitted according to user setup.

The memory 150 may include a disc, a random access memory (RAM), or a flash memory as the secondary memory unit of the controller 160. The memory 150 may store an operating system (OS) for operating the electronic device 100 under the control of the controller 160, and data that is created in the electronic device 100 or received from external devices, for example, servers, or desktop personal computers (PCs), through the communication unit or an external interface (not shown).

In an example of the present disclosure, the memory 150 may include a buffer 151 for storing deleted text. For example, when a specific amount of text is deleted from the screen according to a drag input on the delete function key, the controller 160 may make a control to store the deleted text in the buffer 151. After a specific amount of text is deleted from the screen, if a drag input is received to restore (or recover) the deleted text, the controller 160 may restore the text stored in the buffer 151, based on the drag input. In an embodiment of the present disclosure, when the touch on the delete function key or the drag input is released, the controller 160 may make a control to delete (or remove) the text stored in the buffer 151.

In an example of the present disclosure, the controller 160 may store a text deletion speed configuration program. The text deletion speed configuration program 153 may include a routine for enlarging and displaying the delete function key according to a touch on the delete function key for a certain time, a routine for configuring a text deletion speed according to a drag input with the touch on the delete function key maintained, and a routine for displaying the remaining text after deleting the text in part according to a release of the drag input on the delete function key. The routine for enlarging and displaying the delete function key may further include a sub-routine for displaying a slider and a slide bar. The routine for configuring the text deletion speed may further include a sub-routine for deleting text positioned on the left of a cursor, and a sub-routine for deleting text positioned on the right of a cursor, depending on the direction of the drag input. The routine for configuring the text deletion speed may further include a sub-routine for deleting text, and a sub-routine for restoring (or recovering) deleted text, depending on the direction of the drag input.

The controller 160 may control overall operations of the electronic device 100 and traffic signals between internal elements of the electronic device 100, and may process data. The controller 160 may control power supply from a battery to the internal elements. The controller 160 may execute various applications stored in the program area. Hereinafter, the operation of the controller 160 will be described with reference to the drawings.

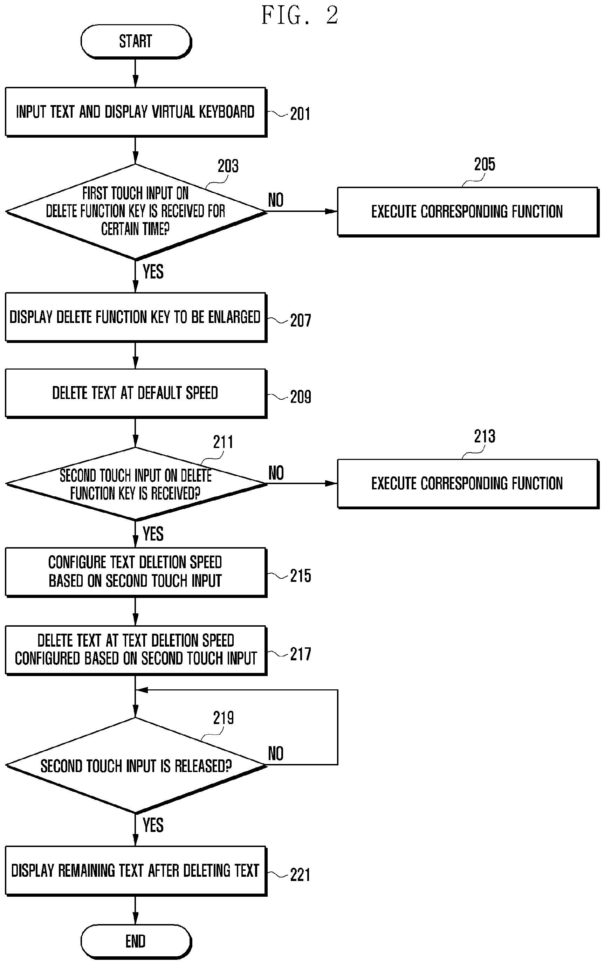

FIG. 2 is a flowchart illustrating a method for controlling a virtual keyboard of an electronic device according to an embodiment of the present disclosure.

Referring to FIG. 2, in operation 201, the controller 160 may make a control to input text and to display a virtual keyboard. For example, the controller 160 may execute various functions, such as text messages, an e-mail, chatting, notes, or searching through web pages, according to a user input. The controller 160 may control the touch screen 120 to automatically display the virtual keyboard by the execution of the functions, or to display the virtual keyboard upon the receipt of a certain input during the execution of the functions. In an embodiment of the present disclosure, the controller 160 may input text through keys included in the virtual keyboard. In another embodiment of the present disclosure, if the user inputs text into a text input window displayed on the screen by copying or cutting off the text from other electronic documents, the controller 160 may control the touch screen 120 to display the input text. In still another embodiment of the present disclosure, if the user inputs text using an automatic completion function, i.e., by selecting a keyword displayed on the screen, the controller 160 may control the touch screen 120 to display the input text. However, the present disclosure is not limited to the embodiments above, and the technical concept of the present disclosure may include various methods for inputting text using the electronic device 100.

In operation 203, the controller 160 may determine whether or not the first touch input on the delete function key is received for a certain time. The delete function key may be a backspace key for deleting text positioned on the left of a cursor. In an embodiment of the present disclosure, the first touch input on the delete function key for a certain time may be a touch input that is maintained (or held) on the delete function key for a certain time.

When it is determined that the first touch input on the delete function key is not received for the certain time in operation 203, the controller 160 may execute a corresponding function in operation 205. In an embodiment of the present disclosure, when the touch input on the delete function key is maintained for less than the certain time, for example, when the user taps the delete function key, the controller 160 may make a control to delete text positioned on the left of a cursor one by one. In another embodiment of the present disclosure, if the user taps the delete function key at least twice, the controller 160 may make a control to delete text by the number of letters corresponding to the number of taps.

In another embodiment of the present disclosure, if a touch input on another function key other than the delete function key of the virtual keyboard is received, the controller 160 may make a control to execute a function corresponding to the function key.

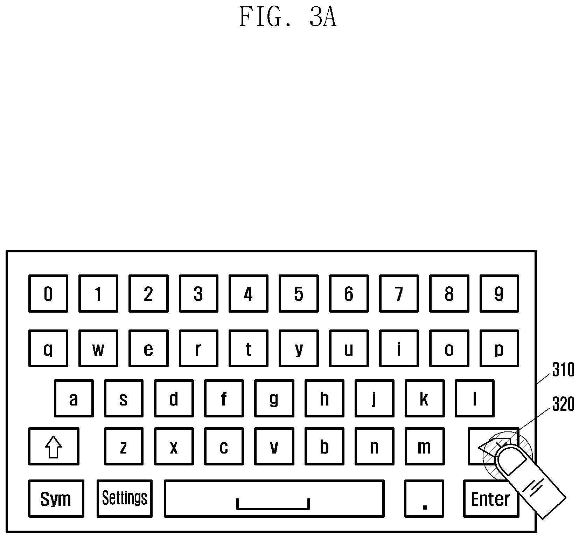

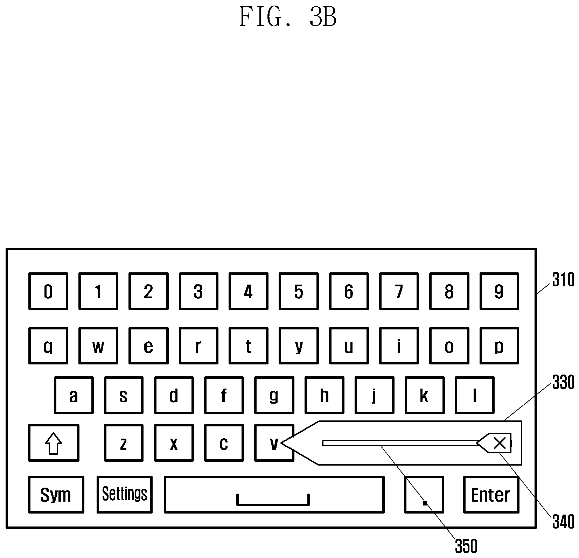

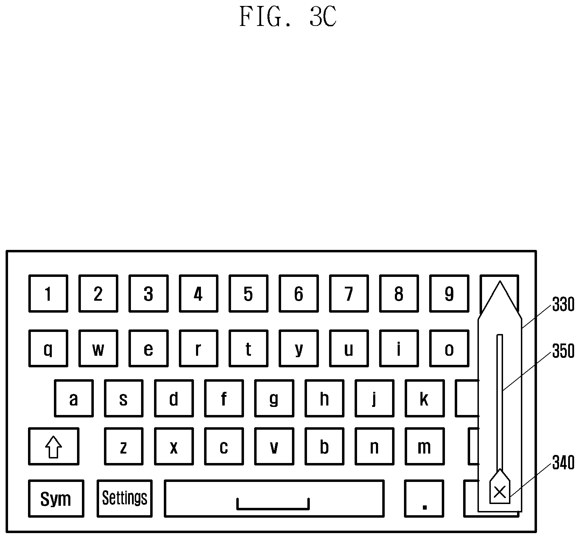

When it is determined that the first touch input on the delete function key is received for the certain time in operation 203, the controller 160 may control the touch screen 120 to enlarge and display the delete function key in operation 207. Hereinafter, operation 207 will be described with reference to FIGS. 3A, 3B, and 3C.

FIGS. 3A, 3B, and 3C illustrate a delete function key that is displayed to be enlarged according to various embodiments of the present disclosure.

Referring to FIGS. 3A, 3B, and 3C, a virtual keyboard 310 in the QWERTY type is illustrated. Referring to FIG. 3A, if the user keeps touching a delete function key 320 for a certain time, the controller 160 may control the touch screen 120 to display an enlarged delete function key 330 as shown in FIG. 3B or 3C. Referring to FIG. 3B, the enlarged delete function key 330 may be displayed to be enlarged in the horizontal direction with respect to the arrangement direction of keys. The enlarged delete function key 330 may include a slider 340 and a slide bar 350 that is displayed horizontally with respect to the arrangement direction of keys. When a drag input is received from the user, the controller 160 may control the slider 340 to move to the left or to the right on the slide bar 350. Referring to FIG. 3C, the enlarged delete function key 330 may be displayed to be enlarged in the vertical direction with respect to the arrangement direction of keys. The enlarged delete function key 330 may include a slider 340 and a slide bar 350 that is displayed vertically with respect to the arrangement direction of keys. When a drag input is received from the user, the controller 160 may control the slider 340 to move up and down on the slide bar 350. Meanwhile, the enlargement of the delete function key 320 is not limited to FIG. 3B or 3C. For example, although the enlarged delete function key 330 is illustrated to overlap the original delete function key 320 in FIG. 3B or 3C, the enlarged delete function key 330 may be displayed at a separate position spaced a certain distance from the original delete function key 320. In an embodiment of the present disclosure, although the enlarged delete function key 330 is illustrated to have a shape of a pentagon in FIG. 3B or 3C, the enlarged delete function key 330 may have various shapes. In an embodiment of the present disclosure, at least one of the slider 340 and the slide bar 350 may be omitted. For example, the enlarged delete function key 330 may include only one of the slider 340 and the slide bar 350.

In an embodiment of the present disclosure, operation 207 may be omitted. For example, when the first touch input on the delete function key 320 is received for the certain time and the enlarged delete function key 330 is not displayed, the controller 160 may control to configure a text deletion speed when an input of dragging left, right, up, or down is received.

Referring back to FIG. 2, in operation 209, the controller 160 may delete text at a default speed. In an embodiment of the present disclosure, the default speed may be the slowest among the configured text deletion speeds. In an embodiment of the present disclosure, the controller 160 may make a control to delete text one by one at a default speed, in proportion to the time for which the first touch input is maintained.

In an embodiment of the present disclosure, operation 209 may be omitted. For example, the controller 160 may control the text deleting function not to be executed while the delete function key 320 is displayed to be enlarged.

In operation 211, the controller 160 may determine whether or not the second touch input on the delete function key 320 is received. In an embodiment of the present disclosure, for example, the second touch input may be a gesture of dragging a touch on the delete function key 320, while the touch on the delete function key 320 is maintained.

When it is determined that the second touch input on the delete function key 320 is not received in operation 211, the controller 160 may make a control to execute a corresponding function in operation 213. For example, the controller 160 may make a control to delete text one by one at a default speed, in proportion to the time for which the first touch input is maintained. In another embodiment of the present disclosure, when the first touch input on the delete function key 320 is released without the second touch input, the controller 160 may control the touch screen 120 to display the remaining text after deleting the text in part.

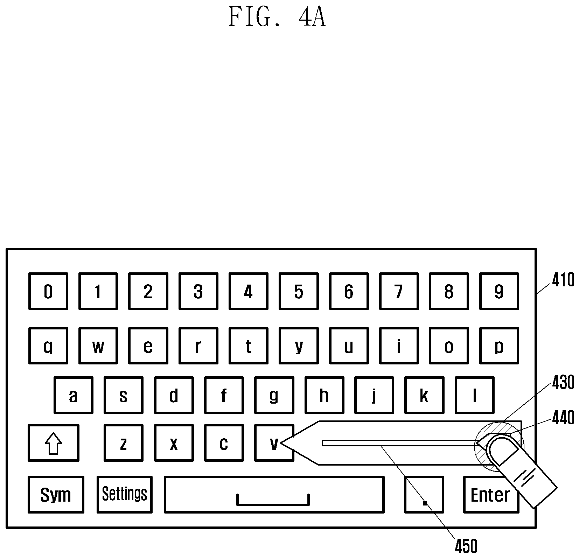

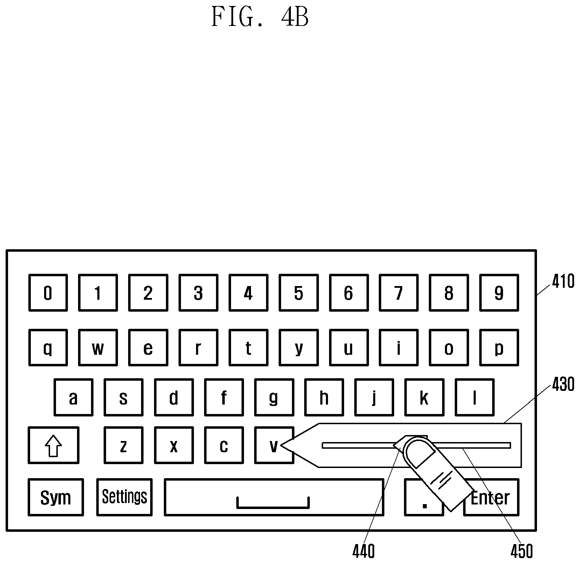

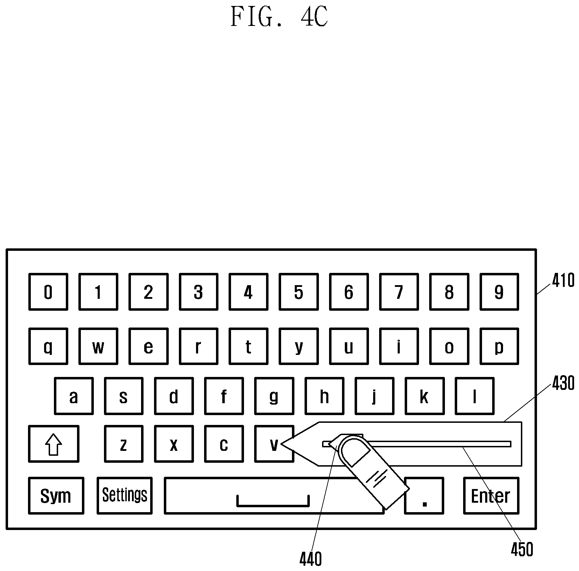

When it is determined that the second touch input on the delete function key 320 is received in operation 211, the controller 160 may configure a text deletion speed, based on the second touch input in operation 215. Hereinafter, operation 215 will be described with reference to FIGS. 4A, 4B, and 4C.

FIGS. 4A, 4B, and 4C illustrate a function of the delete function key according to various embodiments of the present disclosure. FIGS. 4A, 4B, and 4C illustrate a virtual keyboard having an enlarged delete function key.

Referring to FIG. 4A, in a virtual keyboard 410 of FIG. 4A, when a slider 440 is in the rightmost position on a slide bar 450, the controller 160 may configure the text deletion speed to be the same as a default speed. In an embodiment of the present disclosure, when the slider 440 is in the rightmost position on the slide bar 450 as shown in FIG. 4A, the controller 160 may configure the default speed as the slowest speed. In an embodiment of the present disclosure, before the text is deleted (e.g., the text deletion speed is configured to be zero), the slider 440 may be in the rightmost position on the slide bar 450 as shown in FIG. 4A.

Referring to FIG. 4B, when the user inputs the second touch input, for example, when the user drags the slider 440 of an enlarged delete function key 430 to the left, the controller 160 may configure the text deletion speed to be increased. As the slider 440 is further dragged to the left from the rightmost position on the slide bar 450, for example, the controller 160 may configure the text deletion speed to be increased in proportion thereto.

Referring to FIG. 4C, when the user drags the slider 440 to the leftmost position on the slide bar 450, the controller 160 may configure the text deletion speed to be fastest. In an embodiment of the present disclosure, when the user drags the slider 440 to the leftmost position on the slide bar 450, the controller 160 may configure the text deletion speed so that the entire text is deleted.

Returning back to FIG. 2, in operation 217, the controller 160 may make a control to delete specific text, based on the second touch input. For example, when the user drags the slider 440 to the left or to the right on the slide bar 450, the text may be deleted continuously (or without a pause) based on the text deletion speed that varies with the drag input.

In operation 219, the controller 160 may determine whether or not the second touch input is released. For example, the controller 160 may determine whether or not the drag input on the delete function key is released. If the second touch input is not released, the controller 160 may make a control to delete the entire text at a configured speed to the last letter.

When the second touch input is released in operation 219, the controller 160 may control the touch screen 120 to display the remaining text after deleting the text in part, in operation 221.

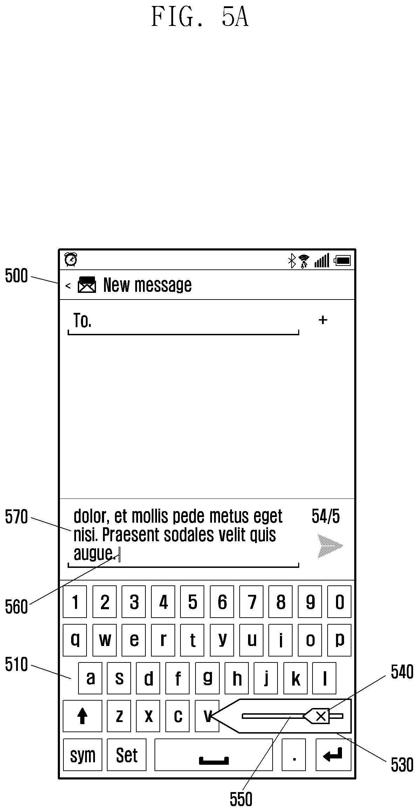

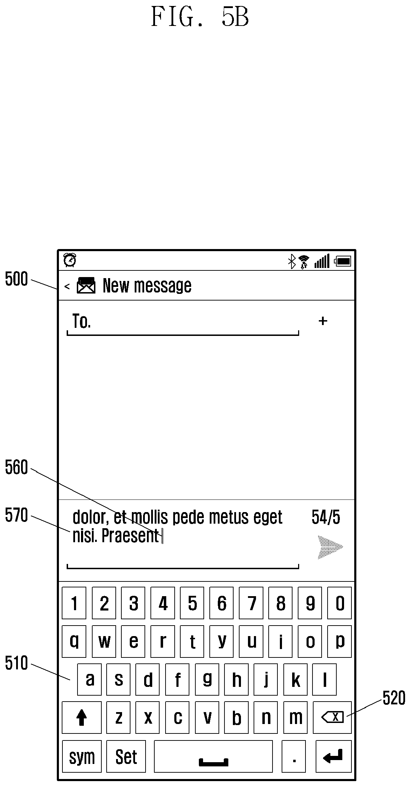

FIGS. 5A and 5B illustrate a method for controlling a virtual keyboard of an electronic device according to various embodiments of the present disclosure.

Referring to FIG. 5A, a text input window 570 of a virtual keyboard 510 of an electronic device 500, in which text has been input, and an enlarged delete function key 530 displayed by a user touch input thereon are illustrated. Referring to FIG. 5A, when the user drags a slider 540 to the left from the right on a slide bar 550, the controller 160 may make a control to delete the text positioned on the left of a cursor 560. In an embodiment of the present disclosure, when the user drags the slider 540 of the enlarged delete function key 530 to the left, the controller 160 may configure the text deletion speed to be increased. For example, as the slider 540 is further dragged to the left from the rightmost position on the slide bar 550, the controller 160 may configure the text deletion speed to be increased in proportion thereto.

Referring to FIG. 5B, for example, the remaining text after the user released the drag input from the enlarged delete function key 530 is illustrated. At this point, the controller 160 may control the electronic device 500 to display the original delete function key 520 that is not enlarged.

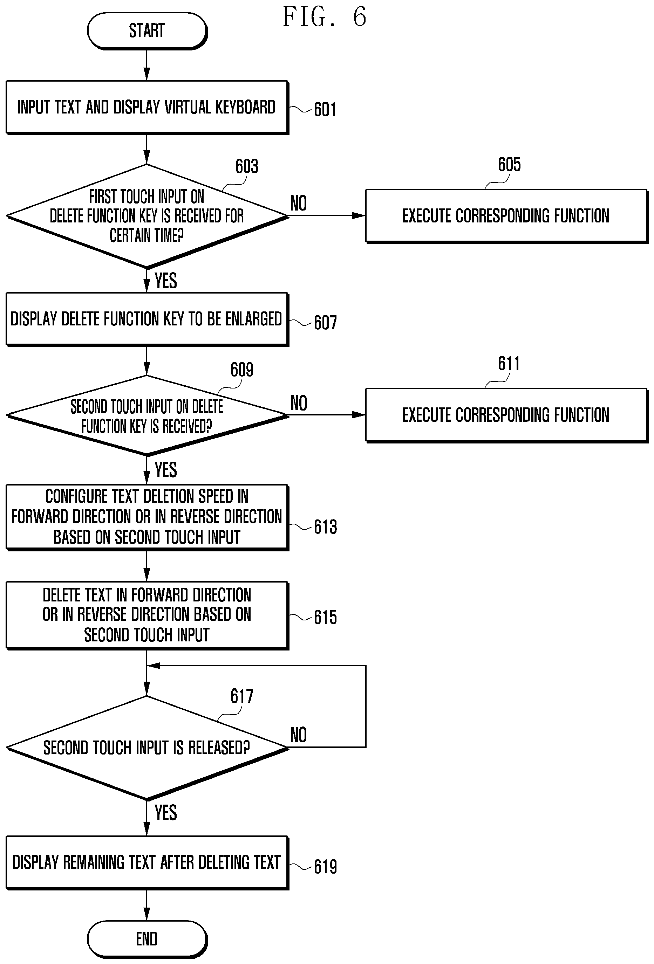

FIG. 6 is a flowchart illustrating a method for controlling a virtual keyboard of an electronic device according to an embodiment of the present disclosure.

Referring to FIG 6, in operation 601, the controller 160 may make a control to input text and to display a virtual keyboard. For example, the controller 160 may execute various functions, such as text messages, an e-mail, chatting, notes, or searching through web pages, according to a user input.

The controller 160 may control the touch screen 120 to automatically display the virtual keyboard by the execution of the functions, or to display the virtual keyboard upon the receipt of a certain input during the execution of the functions. In an embodiment of the present disclosure, the controller 160 may input text through keys included in the virtual keyboard. In another embodiment of the present disclosure, if the user inputs text into a text input window displayed on the screen by copying or cutting off the text from other electronic documents, the controller 160 may control the touch screen 120 to display the input text.

In still another embodiment of the present disclosure, if the user inputs text using an automatic completion function, i.e., by selecting a keyword displayed on the screen, the controller 160 may control the touch screen 120 to display the input text. However, the present disclosure is not limited to the various embodiments above, and the technical concept of the present disclosure may include various methods for inputting text using the electronic device 100.

In operation 603, the controller 160 may determine whether or not the first touch input on the delete function key is received for a certain time. In an embodiment of the present disclosure, the first touch input on the delete function key for a certain time may be a touch input that is maintained (or held) on the delete function key for a certain time.

When it is determined that the first touch input on the delete function key is not received for the certain time in operation 603, the controller 160 may execute a corresponding function in operation 605. In an embodiment of the present disclosure, when the touch input on the delete function key is maintained for less than the certain time, for example, when the user taps the delete function key, the controller 160 may make a control to delete text positioned on the left of a cursor one by one. In another embodiment of the present disclosure, if the user taps the delete function key at least twice, the controller 160 may make a control to delete text by the number of letters corresponding to the number of taps.

In another embodiment of the present disclosure, if a touch input on another function key other than the delete function key of the virtual keyboard is received, the controller 160 may make a control to execute a function corresponding to the function key.

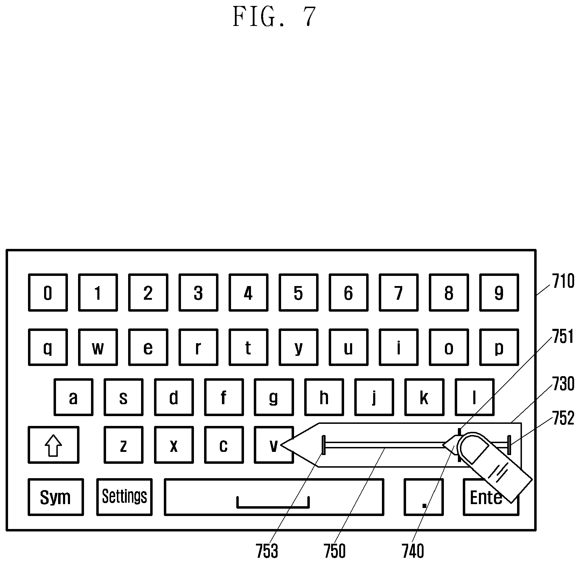

When it is determined that the first touch input on the delete function key is received for the certain time in operation 603, the controller 160 may control the touch screen 120 to enlarge and display the delete function key in operation 607. Hereinafter, operation 607 will be described with reference to FIG. 7.

FIG. 7 illustrates a function of a delete function key of an electronic device according to an embodiment of the present disclosure. FIG. 7 illustrates a virtual keyboard 710 in the QWERTY type.

Referring to FIG. 7, if the user keeps touching a delete function key 730 for a certain time, the controller 160 may control the touch screen 120 to display an enlarged delete function key 730. The enlarged delete function key 730 may be displayed to be enlarged in the horizontal direction with respect to the arrangement direction of keys. The enlarged delete function key 730 may include a slider 740 and a slide bar 750 that is displayed horizontally with respect to the arrangement direction of keys. When a drag input is received from the user, the controller 160 may control the slider 740 to move to the left or to the right on the slide bar 750. However, the enlarged delete function key 730 is not limited thereto, and the enlarged delete function key 730 may be displayed in the vertical direction as shown in FIG. 3C. In an embodiment of the present disclosure, the enlarged delete function key 730 may further include a vertical bar 751 for indicating a reference position, a vertical bar 753 in the leftmost position on the slide bar 750, and a vertical bar 752 in the rightmost position on the slide bar 750. When a drag input is received from the user, the controller 160 may control the slider 740 to move to the left or to the right on the slide bar 750. Meanwhile, the enlargement of the delete function key is not limited thereto. For example, although the enlarged delete function key 730 is illustrated to overlap the original delete function key in FIG. 7, the enlarged delete function key 730 may be displayed at a separate position spaced a certain distance from the original delete function key. In an embodiment of the present disclosure, although the enlarged delete function key is illustrated to have a shape of a pentagon in the drawing, the enlarged delete function key may have various shapes. In an embodiment of the present disclosure, at least one of the slider and the slide bar may be omitted. For example, the enlarged delete function key 730 may include only one of the slider 740 and the slide bar 750.

In an embodiment of the present disclosure, operation 607 may be omitted. For example, when the first touch input on the delete function key 730 is received for the certain time and the enlarged delete function key is not displayed, the controller 160 may control to configure the text deletion speed when an input of dragging left, right, up, or down is received.

Although not shown in FIG. 6, in an embodiment of the present disclosure, when the slider 740 is in a reference position (e.g., when the slider 740 is positioned on the vertical bar 751), the controller 160 may delete text at a default speed. In an embodiment of the present disclosure, the default speed may be the slowest among the configured text deletion speeds. In an embodiment of the present disclosure, the controller 160 may make a control to delete text positioned on the left of a cursor one by one at a default speed, in proportion to the time for which the first touch input is maintained.

Referring back to FIG. 6, in operation 609, the controller 160 may determine whether or not the second touch input on the delete function key is received. In an embodiment of the present disclosure, the second touch input, for example, may be a gesture of dragging a touch on the delete function key while the touch on the delete function key is maintained.

When it is determined that the second touch input on the delete function key is not received in operation 609, the controller 160 may make a control to execute a corresponding function in operation 611. For example, the controller 160 may make a control to delete text one by one at a default speed, in proportion to the time for which the first touch input is maintained. In another embodiment of the present disclosure, when the first touch input on the delete function key is released without the second touch input, the controller 160 may control the touch screen 120 to display the remaining text after deleting the text in part.

When it is determined that the second touch input on the delete function key is received in operation 611, the controller 160 may configure a text deletion speed of the forward direction or of the reverse direction, based on the second touch input in operation 613. For example, when the user drags the slider 740 to the left from the reference position vertical bar 751 in FIG. 7, the controller 160 may configure a speed for deleting the text positioned in the reverse direction (e.g., on the left) of a cursor. As the slider 740 is dragged toward (or, closer to) the leftmost vertical bar 753 from the reference position vertical bar 751, the controller 160 may configure the text deletion speed to be increased. When the user drags the slider 740 to the right from the reference position vertical bar 751 in FIG. 7, the controller 160 may configure a speed for deleting the text positioned in the forward direction (e.g., on the right) of a cursor. As the slider 740 is dragged toward (or, closer to) the rightmost vertical bar 752 from the reference position vertical bar 751, the controller 160 may configure the text deletion speed to be increased.

Referring back to FIG. 6, in operation 615, the controller 160 may delete the text in the forward direction or in the reverse direction, based on the second touch input. For example, when the user drags the slider 740 to the left or to the right on the slide bar 750, the controller 160 may make a control to delete the text continuously, based on the text deletion speed that varies with the drag input.

In an embodiment of the present disclosure, when the user drags the slider 740 to the right from the reference position vertical bar 751, the controller 160 may make a control to delete the text, which is positioned on the right of the cursor, in sequence from the cursor while the cursor is fixed. In another embodiment of the present disclosure, the controller 160 may make a control to delete the text, which is positioned on the right of the cursor, in sequence from the cursor while moving the cursor to the right.

In operation 617, the controller 160 may determine whether or not the second touch input is released. For example, the controller 160 may determine whether or not the drag input on the delete function key is released. If the second touch input is not released, the controller 160 may make a control to delete the entire text at the configured speed to the last letter.

When the second touch input is released in operation 617, the controller 160 may control the touch screen 120 to display the remaining text after deleting the text in part, in operation 619.

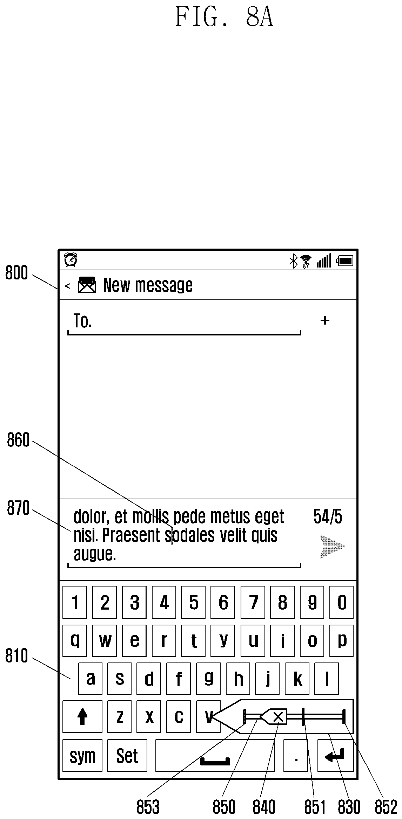

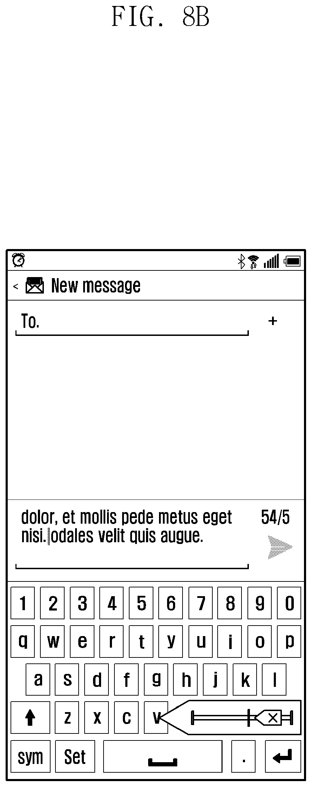

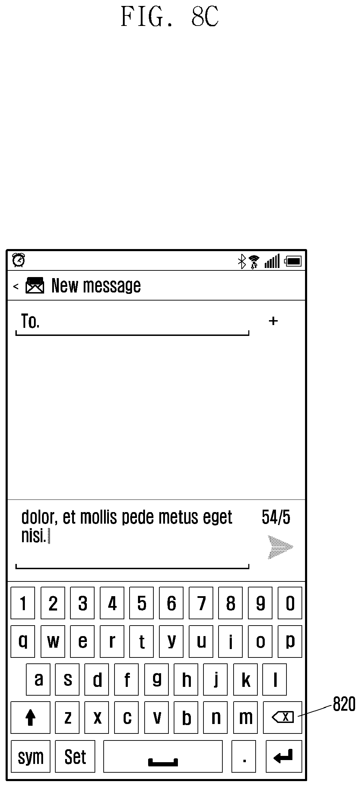

FIGS. 8A, 8B, and 8C illustrate a method for controlling a virtual keyboard of an electronic device according to various embodiments of the present disclosure.

Referring to FIG. 8A, 8B, and 8C, when the user drags an enlarged delete function key 830 to the left from a reference position vertical bar 851 in FIG. 8A, the controller 160 may delete text in the reverse direction from the position of a cursor 860 (e.g., to the left from the cursor 860) as shown in FIG. 8B. Referring to FIG. 8B, the controller 160 may control the touch screen 120 to display the remaining text after deleting the text of "Praesent s" that has been displayed in a text input window 870 of a virtual keyboard 810 of an electronic device 800 of FIG. 8A. In an embodiment of the present disclosure, when the enlarged delete function key 830 is dragged 840 to a vertical bar 853 in the leftmost position 850, the controller 160 may make a control to delete the entire text displayed on the left of the cursor 860 in the text input window 870.

When the user drags the enlarged delete function key 830 to the right from the reference position vertical bar 851 in FIG. 8B, the controller 160 may make a control to delete text in the forward direction from the position of the cursor 860 (e.g., to the right from the cursor 860) as shown in FIG. 8C. Referring to FIG. 8C, the controller 160 may control the touch screen 120 to display the remaining text after deleting the text of "odalesvelitquisauque." that has been displayed on the right of the cursor 860. In an embodiment of the present disclosure, when the delete function key is dragged to a vertical bar 852 in the rightmost position, the controller 160 may make a control to delete the entire text displayed on the right of the cursor 860 in the text input window 870.

Referring to FIG. 8C, when the drag input on the delete function key is released, the controller 160 may control the touch screen 120 to display the original delete function key 820 that is not enlarged.

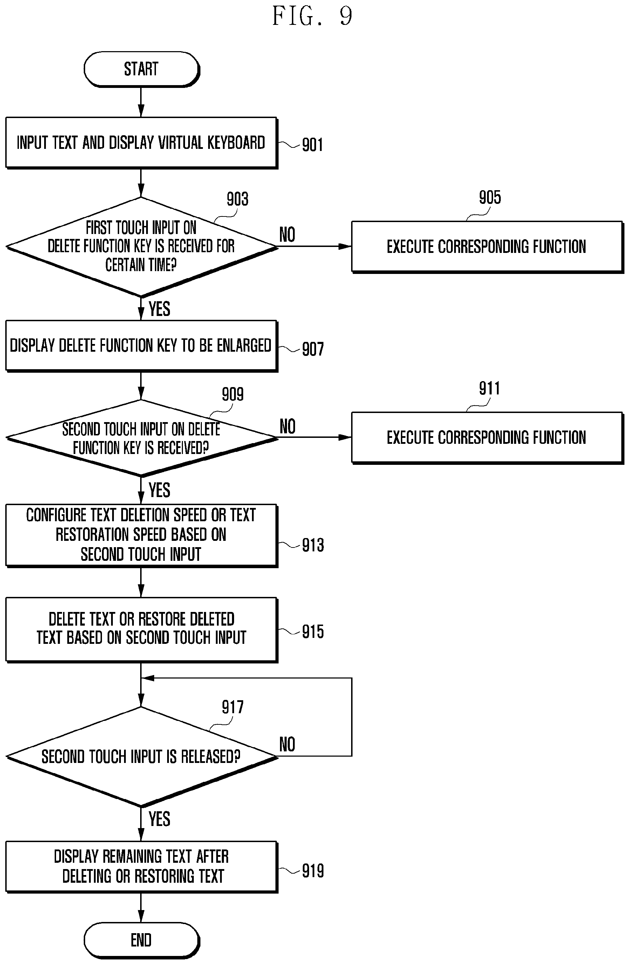

FIG. 9 is a flowchart illustrating a method for controlling a virtual keyboard of an electronic device according to an example of the present disclosure.

Referring to FIG. 9, in operation 901, the controller 160 may make a control to input text and to display a virtual keyboard. For example, the controller 160 may execute various functions, such as text messages, an e-mail, chatting, notes, or searching through web pages, according to a user input. The controller 160 may control the touch screen 120 to automatically display the virtual keyboard by the execution of the functions, or to display the virtual keyboard upon the receipt of a certain input during the execution of the functions. In an embodiment of the present disclosure, the controller 160 may input text through keys included in the virtual keyboard. In another embodiment of the present disclosure, if the user inputs text into a text input window displayed on the screen by copying or cutting off the text from other electronic documents, the controller 160 may control the touch screen 120 to display the input text. In still another embodiment of the present disclosure, if the user inputs text using an automatic completion function, i.e., by selecting a keyword displayed on the screen, the controller 160 may control the touch screen 120 to display the input text. However, the present disclosure is not limited to the embodiments above, and the technical concept of the present disclosure may include various methods for inputting text using the electronic device 100.

In operation 903, the controller 160 may determine whether or not the first touch input on the delete function key is received for a certain time. In an embodiment of the present disclosure, the first touch input on the delete function key for a certain time may be a touch input that is maintained (or held) on the delete function key for a certain time.

When it is determined that the first touch input on the delete function key is not received for the certain time in operation 903, the controller 160 may execute a corresponding function in operation 905. In an embodiment of the present disclosure, when the touch input on the delete function key is maintained for less than the certain time, for example, when the user taps the delete function key, the controller 160 may make a control to delete text positioned on the left of a cursor one by one. In another embodiment of the present disclosure, if the user taps the delete function key at least twice, the controller 160 may make a control to delete text by the number of letters corresponding to the number of taps.

In another embodiment of the present disclosure, if a touch input on another function key other than the delete function key of the virtual keyboard is received, the controller 160 may make a control to execute a function corresponding to the function key.

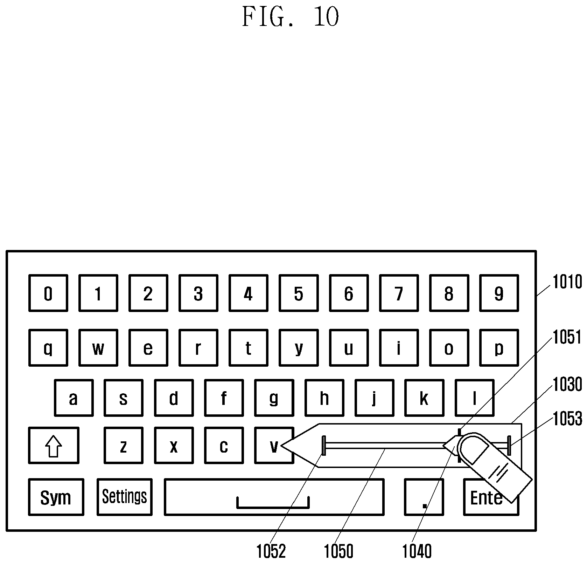

When it is determined that the first touch input on the delete function key is received for the certain time in operation 903, the controller 160 may control the touch screen 120 to enlarge and display the delete function key in operation 907. Hereinafter, operation 907 will be described with reference to FIG. 10.

FIG. 10 illustrates a function of a delete function key of an electronic device according to an embodiment of the present disclosure FIG. 10 illustrates a virtual keyboard 1010 in the QWERTY type.

Referring to FIG. 10, if the user keeps touching a delete function key for a certain time, the controller 160 may control the touch screen 120 to display an enlarged delete function key 1030. The enlarged delete function key 1030 may be displayed to be enlarged in the horizontal direction with respect to the arrangement direction of keys. The enlarged delete function key 1030 may include a slider 1040 and a slide bar 1050 that is displayed horizontally with respect to the arrangement direction of keys. When a drag input is received from the user, the controller 160 may control the slider 1040 to move to the left or to the right on the slide bar 1050. However, the enlarged delete function key 1030 is not limited thereto, and the enlarged delete function key 1030 may be displayed in the vertical direction with respect to the arrangement direction of keys as shown in FIG. 3C. In an embodiment of the present disclosure, the enlarged delete function key 1030 may include a vertical bar 1051 for indicating a reference position, a vertical bar 1052 in the leftmost position on the slide bar 1050, and a vertical bar 1053 in the rightmost position on the slide bar 1050. When a drag input is received from the user, the controller 160 may control the slider 1040 to move to the left or to the right on the slide bar 1050. Meanwhile, the enlargement of the delete function key is not limited thereto. For example, although the enlarged delete function key 1030 is illustrated to overlap the original delete function key in FIG. 10, the enlarged delete function key 1030 may be displayed at a separate position spaced a certain distance from the original delete function key. In an embodiment of the present disclosure, although the enlarged delete function key is illustrated to have a shape of a pentagon in the drawing, the enlarged delete function key may have various shapes. In an embodiment of the present disclosure, at least one of the slider and the slide bar may be omitted. For example, the enlarged delete function key 1030 may include only one of the slider 1040 and the slide bar 1050.

In an embodiment of the present disclosure, operation 907 may be omitted. For example, when the first touch input on the delete function key is received for the certain time and the enlarged delete function key is not displayed, the controller 160 may make a control to configure the text deletion speed when an input of dragging left, right, up, or down is received.

Although not shown in FIG. 9, in an embodiment of the present disclosure, when the slider 1040 is in the reference position (e.g., when the slider 1040 is positioned on the vertical bar 1051), the controller 160 may delete text at a default speed. In an embodiment of the present disclosure, the default speed may be the slowest among the configured text deletion speeds. In an embodiment of the present disclosure, the controller 160 may make a control to delete text positioned on the left of a cursor one by one at a default speed, in proportion to the time for which the first touch input is maintained.

Referring back to FIG. 9, in operation 909, the controller 160 may determine whether or not the second touch input on the delete function key is received. In an aspect of the present disclosure, for example, the second touch input may be a gesture of dragging a touch on the delete function key while the touch on the delete function key is maintained.

When it is determined that the second touch input on the delete function key is not received in operation 909, the controller 160 may make a control to execute a corresponding function in operation 911. For example, the controller 160 may make a control to delete text one by one at a default speed, in proportion to the time for which the first touch input is maintained. In another aspect of the present disclosure, when the first touch input on the delete function key is released without the second touch input, the controller 160 may control the touch screen 120 to display the remaining text after deleting the text in part.

When it is determined that the second touch input on the delete function key is received in operation 911, the controller 160 may configure a speed for deleting text in the reverse direction from the cursor or a speed for restoring deleted text in the forward direction, based on the second touch input in operation 913. For example, when the user drags the slider 1040 to the left from the reference position vertical bar 1051 in FIG. 10, the controller 160 may configure a speed for deleting the text positioned in the reverse direction (e.g., on the left) of a cursor. As the slider 1040 is dragged toward (or, closer to) the leftmost vertical bar 1052 from the reference position vertical bar 1051, the controller 160 may configure the text deletion speed to be increased. When the user drags the slider 1040 to the right from the reference position vertical bar 1051 in FIG. 10, the controller 160 may configure a speed for restoring the deleted text positioned in the forward direction (e.g., on the right) of a cursor.

As the slider 1040 is dragged toward (or, closer to) the rightmost vertical bar 1053 from the reference position vertical bar 1051, the controller 160 may configure the text restoration speed to be increased.

In operation 915, the controller 160 may delete or restore the text in the forward direction or in the reverse direction, based on the second touch input. For example, when the user drags the slider 1040 to the left or to the right on the slide bar 1050, the controller 160 may make a control to delete or restore the text continuously, based on the text deletion speed that varies with the drag input.

In an example of the present disclosure, if a specific amount of text is deleted from the screen according to a drag input of the reverse direction on the delete function key, the controller 160 may make a control to store the deleted text in the buffer 151. After a specific amount of text is deleted from the screen, when a drag input for restoring (or recovering) the deleted text is received, for example, when the slider is dragged to the right from the reference position vertical bar, the controller 160 may restore the text stored in the buffer 151, based on the drag input.

In operation 917, the controller 160 may determine whether or not the second touch input is released. For example, the controller 160 may determine whether or not the drag input on the delete function key is released. If the second touch input is not released, the controller 160 may make a control to delete or restore the entire text at a certain speed to the last letter.

When the second touch input is released in operation 917, the controller 160 may control the touch screen 120 to display the remaining text or the restored text after deleting and restoring the text, in operation 919. In an example of the present disclosure, when the touch input or the drag input on the delete function key is released, the controller 160 may make a control to delete (or remove) the text stored in the buffer 151.

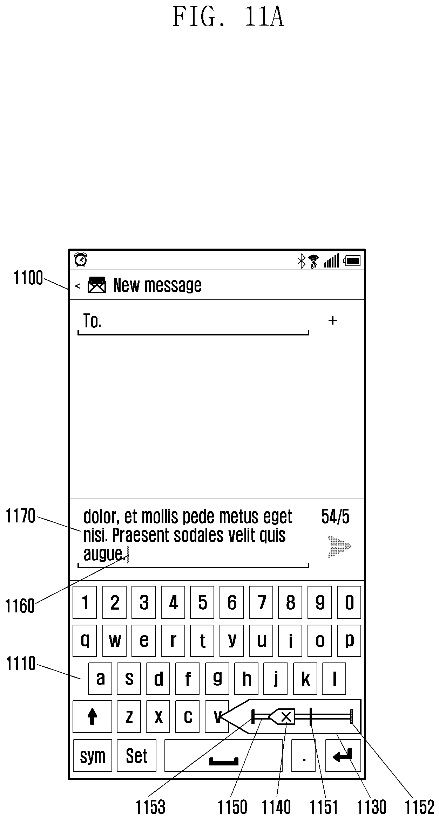

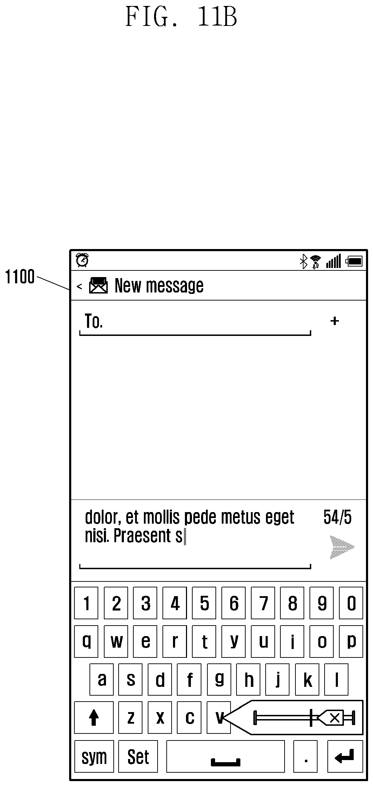

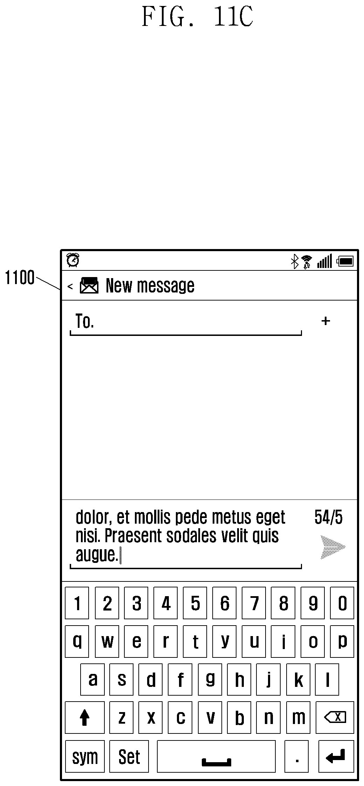

FIGS. 11A, 11B, and 11C illustrate a method for controlling a virtual keyboard of an electronic device according to various embodiments of the present disclosure.

Referring to FIGS. 11A, 11B, and 11C, when the user drags an enlarged delete function key 1130 of an electronic device 1100 to the left from a reference position vertical bar 1151 in FIG. 11A, the controller 160 may delete the text in the reverse direction from the position of a cursor 1160 (e.g., on the left of the cursor 1160) as shown in diagram 1103. Referring to FIG. 11B, the controller 160 may control the touch screen 120 to display the remaining text after deleting the text of "odalesvelitquisauque." that has been displayed in a text input window of diagram 1101. In an embodiment of the present disclosure, when the delete function key is dragged 1140 to a vertical bar 1153 in the leftmost position 1150, the controller 160 may make a control to delete the entire text displayed on the left of the cursor 1160 in the text input window 1170 of a virtual keyboard 1110 of the electronic device 1100.

When the user drags an enlarged delete function key 1130 to the right from the reference position vertical bar 1151 in FIG. 11B, the controller 160 may make a control to restore (or recover) the deleted text based on the position of the cursor 1160 as shown in FIG. 11C. Referring to FIG. 11C, the controller 160 may control the touch screen 120 to display the text, in which "odales velit quis auque." has been restored, in the text input window 1170. In an example of the present disclosure, when the delete function key is dragged to a vertical bar 1152 in the rightmost position, the controller 160 may control the touch screen 120 to display the restored text on the right of the cursor 1160 in the text input window 1170. Referring to FIG. 11C, when the drag input on the delete function key is released, the controller 160 may control the touch screen 120 to display the original delete function key 1120 that is not enlarged.

Meanwhile, the above-described electronic device may further include various additional modules according to a form of implementation thereof. Specifically, the electronic device may further include elements which have not been described above, such as a short-range communication module for short-range communication, an interface for transmitting and receiving data in a wired communication scheme or a wireless communication scheme of the electronic device, an Internet communication module for communicating with an Internet network and performing an Internet function, a digital broadcasting module for receiving and reproducing a digital broadcast signal, and the like. These elements may be variously modified according to the convergence trend of digital devices, and cannot be all enumerated. However, the electronic device 100 may further include elements equivalent to the above-described elements. In the electronic device, of course, a particular configuration may be excluded from the above-described configuration or may be replaced by another configuration according to the form of implementation thereof. This may be easily understood by those skilled in the art to which the present disclosure pertains.

Certain aspects of the present disclosure can also be embodied as computer readable code on a non-transitory computer readable recording medium. A non-transitory computer readable recording medium is any data storage device that can store data which can be thereafter read by a computer system. Examples of the non-transitory computer readable recording medium include a Read-Only Memory (ROM), a Random-Access Memory (RAM), Compact Disc-ROMs (CD-ROMs), magnetic tapes, floppy disks, and optical data storage devices. The non-transitory computer readable recording medium can also be distributed over network coupled computer systems so that the computer readable code is stored and executed in a distributed fashion. In addition, functional programs, code, and code segments for accomplishing the present disclosure can be easily construed by programmers skilled in the art to which the present disclosure pertains.

At this point it should be noted that the various embodiments of the present disclosure as described above typically involve the processing of input data and the generation of output data to some extent. This input data processing and output data generation may be implemented in hardware or software in combination with hardware. For example, specific electronic components may be employed in a mobile device or similar or related circuitry for implementing the functions associated with the various embodiments of the present disclosure as described above. Alternatively, one or more processors operating in accordance with stored instructions may implement the functions associated with the various embodiments of the present disclosure as described above. If such is the case, it is within the scope of the present disclosure that such instructions may be stored on one or more non-transitory processor readable mediums. Examples of the processor readable mediums include a ROM, a RAM, CD-ROMs, magnetic tapes, floppy disks, and optical data storage devices. The processor readable mediums can also be distributed over network coupled computer systems so that the instructions are stored and executed in a distributed fashion. In addition, functional computer programs, instructions, and instruction segments for accomplishing the present disclosure can be easily construed by programmers skilled in the art to which the present disclosure pertains.

While the present disclosure has been shown and described with reference to various embodiments thereof, it will be understood by those skilled in the art that various changes in form and details may be made therein without departing from the scope of the present disclosure as defined by the appended claims.

## Claims

1. A method for controlling a virtual keyboard of an electronic device (100), the method comprising:
displaying (601) the virtual keyboard (310);
displaying text inputted through the virtual keyboard (310);
receiving (603) a first touch input signal that is created by touching a text delete function key (320) included in the displayed virtual keyboard (310);
displaying (607) the text delete function key (320) to be enlarged (330), based on the first touch input signal, wherein the enlarged key comprises a slide bar (850) in form of a line and a slider (840);
receiving (609) a second touch input signal moving the slider (840) on the slide bar (850);
**characterized in that** if the slider (840) is moved from a reference position configured to be on the slide bar (850) toward one end of the slide bar (850), based on the second touch input signal, configuring (613) a direction for deleting the text positioned on the left of a cursor (860);
if the slider (840) is moved from a reference position configured to be on the slide bar (850) toward the other end of the slide bar (850), based on the second touch input signal, configuring (613) a direction for deleting the text positioned on the right of the cursor (860); and
deleting (615) the text according to the configured direction.

2. The method of claim 1, wherein the line is displayed in the horizontal direction or in the vertical direction with respect to the arrangement direction of keys included in the virtual keyboard.

3. The method of claim 1, further comprising, configuring (613) a speed for deleting the text, based on the second touch input signal.

4. The method of claim 3, wherein configuring (215, 613) the speed for deleting the text, based on the second touch input signal, comprises, if the slider (840) is moved from a reference position configured to be at one end of the slide bar (850) toward the other end of the slide bar (850), based on the second touch input signal, configuring (601) the speed for deleting the text to be increased based on a distance between the slider (850) and the reference position.

5. The method of claim 3, wherein configuring (613) the speed for deleting the text, based on the second touch input signal, comprises:
if the slider (840) is moved from a reference position configured to be on the slide bar (850) toward one end of the slide bar (850), based on the second touch input signal, configuring (613) the speed for deleting the text positioned on the left of a cursor (860) to be increased based on a moving distance between the slider (840) and the reference position; and
if the slider (840) is moved from the reference position configured to be on the slide bar (850) toward the other end of the slide bar (850), based on the second touch input signal, configuring (613) the speed for deleting the text positioned on the right of the cursor (860) to be increased based on a moving distance between the slider (840) and the reference position.

6. The method of claim 3, wherein configuring (215, 613) the speed for deleting the text, based on the second touch input signal, comprises, if the slider (840) is moved toward one end of the slide bar, configuring the entire text to be deleted.

7. An electronic device (100) comprising:
an input unit (130);
a touch screen (120); and
a controller (160) adapted:
to control the touch screen (120) to display (601) a virtual keyboard;
to display text inputted through the virtual keyboard (310) or the input unit (130);
to receive (603) a first touch input signal that is created by touching a text delete function key (320) included in the displayed virtual keyboard (310);
to control the touch screen (120) to display (607) the text delete function key to be enlarged (330) based on the first touch input signal, wherein the enlarged key comprises a slide bar (850) in form of a line and a slider (840);
to receive (609) a second touch input signal moving the slider (840) on the slide bar (850);
**characterized in that** the controller is further adapted:
to configure (613) a direction for deleting the text positioned on the left of a cursor (860), if the slider (840) is moved from a reference position configured to be on the slide bar (850) toward one end of the slide bar (850), based on the second touch input signal;
to configure (613) a direction for deleting the text positioned on the right of the cursor (860), if the slider (840) is moved from a reference position configured to be on the slide bar (850) toward the other end of the slide bar (850), based on the second touch input signal; and
to make a control to delete (615) the text according to the configured direction.

8. The electronic device (100) of claim 7, wherein the controller (160) is further configured to configure (613) a speed for deleting the text, based on the second touch input signal.

9. The electronic device (100) of claim 8, wherein, if the slider (840) is moved from a reference position configured to be at one end of the slide bar (850) toward the other end of the slide bar (850), based on the second touch input signal, the controller (160) is further configured to configure (601) the speed for deleting the text to be increased based on a distance between the slider and the reference position.

10. The electronic device (100) of claim 8,
wherein, if the slider (840) is moved from a reference position configured to be on the slide bar (850) toward one end of the slide bar (850), based on the second touch input signal, the controller (160) is further configured to configure (613) the speed for deleting the text positioned on the left of a cursor (860) to be increased based on a moving distance between the slider (840) and the reference position; and
wherein, if the slider is moved from the reference position configured to be on the slide bar (850) toward the other end of the slide bar (850), based on the second touch input signal, the controller (160) is further configured to configure (613) the speed for deleting the text positioned on the right of the cursor (860) to be increased based on a moving distance between the slider (840) and the reference position.

## Patentansprüche

1. Verfahren zur Steuerung einer virtuellen Tastatur einer elektronischen Vorrichtung (100), wobei das Verfahren umfasst:
Anzeigen (601) der virtuellen Tastatur (310);
Anzeigen von Text, der über die virtuelle Tastatur (310) eingegeben wurde;
Empfangen (603) eines ersten Berührungseingangssignals, das durch Berühren einer in der angezeigten virtuellen Tastatur (310) enthaltenen Text Löschen-Funktionstaste (320) erzeugt wird;
Anzeigen (607) der Text Löschen-Funktionstaste (320) auf der Grundlage des ersten Berührungseingangssignals als vergrößert (330), wobei die vergrößerte Taste einen Schiebebalken (850) in Form einer Linie und einen Schieber (840) umfasst;
Empfangen (609) eines zweiten Berührungseingangssignals, das den Schieber (840) auf dem Schiebebalken (850) bewegt;
**dadurch gekennzeichnet, dass**
wenn der Schieber (840) von einer Referenzposition, die konfiguriert ist, um auf dem Schiebebalken (850) zu sein, zu einem Ende des Schiebebalkens (850) bewegt wird, auf der Grundlage des zweiten Berührungseingangssignals, eine Richtung zum Löschen des links von einem Cursor (860) positionierten Texts konfiguriert wird (613);
wenn der Schieber (840) von einer Referenzposition, die konfiguriert ist, um auf dem Schiebebalken (850) zu sein, zum anderen Ende des Schiebebalkens (850) bewegt wird, auf der Grundlage des zweiten Berührungseingangssignals, eine Richtung zum Löschen des rechts vom Cursor (860) positionierten Texts konfiguriert wird (613); und
Löschen (615) des Texts entsprechend der konfigurierten Richtung.

2. Verfahren nach Anspruch 1, wobei die Linie in der horizontalen Richtung oder in der vertikalen Richtung bezüglich der Anordnungsrichtung von in der virtuellen Tastatur enthaltenen Tasten angezeigt wird.

3. Verfahren nach Anspruch 1, ferner umfassend Konfigurieren (613) einer Geschwindigkeit für das Löschen des Texts auf der Grundlage des zweiten Berührungseingangssignals.

4. Verfahren nach Anspruch 3, wobei das Konfigurieren (215, 613) der Geschwindigkeit für das Löschen des Texts auf der Grundlage des zweiten Berührungseingangssignals umfasst, wenn der Schieber (840) von einer Referenzposition, die konfiguriert ist, an einem Ende des Schiebebalkens (850) zu sein, zum anderen Ende des Schiebebalkens (850) bewegt wird,
auf der Grundlage des zweiten Berührungseingangssignals, Konfigurieren (601) der Geschwindigkeit für das Löschen des Texts als erhöht auf der Grundlage eines Abstands zwischen dem Schieber (840) und der Referenzposition.

5. Verfahren nach Anspruch 3, wobei das Konfigurieren (613) der Geschwindigkeit für das Löschen des Texts, auf der Grundlage des zweiten Berührungseingabesignals, umfasst:
wenn der Schieber (840) von einer Referenzposition, die konfiguriert ist, um auf dem Schiebebalken (850) zu sein, zu einem Ende des Schiebebalkens (850) bewegt wird, auf der Grundlage des zweiten Berührungseingangssignals, Konfigurieren (613) der Geschwindigkeit für das Löschen des links von einem Cursor (860) positionierten Texts als erhöht auf der Grundlage eines beweglichen Abstands zwischen dem Schieber (840) und der Referenzposition; und
wenn der Schieber (840) von der Referenzposition, die konfiguriert ist, um auf dem Schiebebalken (850) zu sein, zum anderen Ende des Schiebebalkens (850) bewegt wird, auf der Grundlage des zweiten Berührungseingangssignals, Konfigurieren (613) der Geschwindigkeit für das Löschen des rechts vom Cursor (860) positionierten Texts als erhöht auf der Grundlage eines beweglichen Abstands zwischen dem Schieber (840) und der Referenzposition.

6. Verfahren nach Anspruch 3, wobei das Konfigurieren (215, 613) der Geschwindigkeit für das Löschen des Texts auf der Grundlage des zweiten Berührungseingangssignals umfasst, wenn der Schieber (840) zu einem Ende des Schiebebalkens bewegt wird, Konfigurieren des gesamten Texts als gelöscht.

7. Elektronische Vorrichtung (100), umfassend:
eine Eingabeeinheit (130);
einen Berührungsbildschirm (120); und
eine Steuerung (160), die angepasst ist:
um den Berührungsbildschirm (120) zu steuern, um eine virtuelle Tastatur anzuzeigen (601);
den über die virtuelle Tastatur (310) oder die Eingabeeinheit (130) eingegebenen Text anzuzeigen;
ein erstes Berührungseingangssignal zu empfangen (603), das durch Berühren einer in der angezeigten virtuellen Tastatur (310) enthaltenen Text Löschen-Funktionstaste (320) erzeugt wird;
den Berührungsbildschirm (120) zu steuern, die Text Löschen-Funktionstaste auf der Grundlage des ersten Berührungseingangssignals als vergrößert (330) anzuzeigen (607), wobei die vergrößerte Taste einen Schiebebalken (850) in Form einer Linie und einen Schieber (840) umfasst;
ein zweites Berührungseingangssignal zu empfangen (609), das den Schieber (840) auf dem Schiebebalken (850) bewegt;
**dadurch gekennzeichnet, dass** die Steuerung ferner angepasst ist:
eine Richtung zum Löschen des links von einem Cursor (860) positionierten Texts zu konfigurieren (613), wenn der Schieber (840) von einer Referenzposition, die konfiguriert ist, um auf dem Schiebebalken (850) zu sein, zu einem Ende des Schiebebalkens (850) bewegt wird, auf der Grundlage des zweiten Berührungseingangssignals;
eine Richtung zum Löschen des rechts vom Cursor (860) positionierten Texts zu konfigurieren (613), wenn der Schieber (840) von einer Referenzposition, die konfiguriert ist, um auf dem Schiebebalken (850) zu sein, zum anderen Ende des Schiebebalkens (850) bewegt wird, auf der Grundlage des zweiten Berührungseingangssignals; und
eine Steuerung vorzunehmen, um den Text entsprechend der konfigurierten Richtung zu löschen (615).

8. Elektronische Vorrichtung (100) nach Anspruch 7, wobei die Steuerung (160) ferner konfiguriert ist, um eine Geschwindigkeit für das Löschen des Texts auf der Grundlage des zweiten Berührungseingangssignals zu konfigurieren (613).

9. Elektronische Vorrichtung (100) nach Anspruch 8, wobei, wenn der Schieber (840) von einer Referenzposition, die konfiguriert ist, an einem Ende des Schiebebalkens (850) zu sein, zum anderen Ende des Schiebebalkens (850) bewegt wird,
auf der Grundlage des zweiten Berührungseingangssignals die Steuerung (160) ferner konfiguriert ist, die Geschwindigkeit für das Löschen des Texts auf der Grundlage eines Abstands zwischen dem Schieber und der Referenzposition als erhöht zu konfigurieren (601).

10. Elektronische Vorrichtung (100) nach Anspruch 8,
wobei, wenn der Schieber (840) von einer Referenzposition, die konfiguriert ist, um auf dem Schiebebalken (850) zu sein, zu einem Ende des Schiebebalkens (850) bewegt wird, auf der Grundlage des zweiten Berührungseingangssignals, die Steuerung (160) ferner konfiguriert ist, um die Geschwindigkeit für das Löschen des links von einem Cursor (860) positionierten Texts auf der Grundlage eines beweglichen Abstands zwischen dem Schieber (840) und der Referenzposition als erhöht zu konfigurieren (613); und
wobei, wenn der Schieber von der Referenzposition, die konfiguriert ist, um auf dem Schiebebalken (850) zu sein, zum anderen Ende des Schiebebalkens (850) bewegt wird, auf der Grundlage des zweiten Berührungseingangssignals, die Steuerung (160) ferner konfiguriert ist, die Geschwindigkeit für das Löschen des rechts vom Cursor (860) positionierten Texts auf der Grundlage eines beweglichen Abstands zwischen dem Schieber (840) und der Referenzposition als erhöht zu konfigurieren (613).

## Revendications

1. Procédé de commande d'un clavier virtuel d'un dispositif électronique (100), le procédé comprenant :
l'affichage (601) du clavier virtuel (310) ;
l'affichage d'un texte entré au moyen du clavier virtuel (310) ;
la réception (603) d'un premier signal d'entrée tactile qui est créé par effleurement d'une touche de fonction de suppression de texte (320) comprise dans le clavier virtuel affiché (310) ;
l'affichage (607) de la touche de fonction de suppression de texte (320) à agrandir (330), sur la base d'un signal d'entrée tactile, la touche agrandie comprenant une barre de défilement (850) sous la forme d'une ligne et d'un curseur de défilement (840) ;
la réception (609) d'un second signal d'entrée tactile déplaçant le curseur (840) sur la barre de défilement (850) ;
**caractérisé en ce que**
si le curseur de défilement (840) est déplacé d'une position de référence configurée pour être sur la barre de défilement (850) en direction d'une extrémité de la barre de défilement (850), sur la base du second signal d'entrée tactile, la configuration (613) d'un sens pour la suppression du texte positionné à gauche d'un curseur (860) ;
si le curseur de défilement (840) est déplacé d'une position de référence configurée pour être sur la barre de défilement (850) en direction de l'autre extrémité de la barre de défilement (850), sur la base du second signal d'entrée tactile, la configuration (613) d'un sens pour la suppression du texte positionné à droite du curseur (860) ; et
la suppression (615) du texte suivant le sens configuré.

2. Procédé selon la revendication 1, ladite ligne étant affichée dans le sens horizontal ou dans le sens vertical par rapport au sens d'agencement des touches comprises dans le clavier virtuel.

3. Procédé selon la revendication 1, comprenant en outre la configuration (613) d'une vitesse de suppression du texte, sur la base du second signal d'entrée tactile.

4. Procédé selon la revendication 3, ladite configuration (215, 613) de la vitesse de suppression du texte, sur la base du second signal d'entrée tactile, comprenant, si le curseur de défilement (840) est déplacé d'une position de référence configurée pour être à une extrémité de la barre de défilement (850) en direction de l'autre extrémité de la barre de défilement (850), sur la base du second signal d'entrée tactile, la configuration (601) de la vitesse de suppression du texte à augmenter sur la base de la distance entre le curseur de défilement (840) et la position de référence.

5. Procédé selon la revendication 3, ladite configuration (613) de la vitesse de suppression du texte, sur la base du second signal d'entrée tactile, comprenant :
si le curseur de défilement (840) est déplacé d'une position de référence configurée pour être sur la barre de défilement (850) en direction d'une extrémité de la barre de défilement (850), sur la base du second signal d'entrée tactile, la configuration (613) de la vitesse de suppression du texte positionné à gauche d'un curseur (860) à augmenter sur la base de la distance de déplacement entre le curseur de défilement (840) et la position de référence ; et
si le curseur de défilement (840) est déplacé de la position de référence configurée pour être sur la barre de défilement (850) en direction de l'autre extrémité de la barre de défilement (850), sur la base du second signal d'entrée tactile, la configuration (613) de la vitesse de suppression du texte positionné à droite du curseur (860) à augmenter sur la base de la distance de déplacement entre le curseur de défilement (840) et la position de référence.

6. Procédé selon la revendication 3, ladite configuration (215, 613) de la vitesse de suppression du texte, sur la base du second signal d'entrée tactile, comprenant, si le curseur de défilement (840) est déplacé en direction d'une extrémité de la barre de défilement, la configuration du texte entier à supprimer.

7. Dispositif électronique (100) comprenant :
une unité d'entrée (130) ;
un écran tactile (120) ; et
un dispositif de commande (160) conçu :
pour commander l'écran tactile (120) pour afficher (601) un clavier virtuel ;
pour afficher un texte entré au moyen du clavier virtuel (310) ou de l'unité d'entrée (130) ;
pour recevoir (603) un premier signal d'entrée tactile qui est créé par effleurement d'une touche de fonction de suppression de texte (320) comprise dans le clavier virtuel affiché (310) ;
pour commander l'écran tactile (120) pour afficher (607) la touche de fonction de suppression de texte à agrandir (330) sur la base du premier signal d'entrée tactile, ladite touche agrandie comprenant une barre de défilement (850) sous la forme d'une ligne et d'un curseur de défilement (840) ;
pour recevoir (609) un second signal d'entrée tactile déplaçant le curseur de défilement (840) sur la barre de défilement (850) ;
**caractérisé en ce que** le dispositif de commande est en outre conçu :
pour configurer (613) un sens de suppression du texte positionné à gauche d'un curseur (860), si le curseur de défilement (840) est déplacé d'une position de référence configurée pour être sur la barre de défilement (850) en direction d'une extrémité de la barre de défilement (850), sur la base du second signal d'entrée tactile ;
pour configurer (613) un sens de suppression du texte positionné à droite du curseur (860), si le curseur de défilement (840) est déplacé d'une position de référence configurée pour être sur la barre de défilement (850) en direction de l'autre extrémité de la barre de défilement (850), sur la base du second signal d'entrée tactile ; et
pour émettre une commande pour supprimer (615) le texte suivant le sens configuré.

8. Dispositif électronique (100) selon la revendication 7, ledit dispositif de commande (160) étant en outre configuré pour configurer (613) une vitesse de suppression du texte, sur la base du second signal d'entrée tactile.

9. Dispositif électronique (100) selon la revendication 8, dans lequel, si le curseur de défilement (840) est déplacé d'une position de référence configurée pour être à une extrémité de la barre de défilement (850) en direction de l'autre extrémité de la barre de défilement (850), sur la base du second signal d'entrée tactile, le dispositif de commande (160) est en outre configuré pour configurer (601) la vitesse de suppression du texte à augmenter sur la base de la distance entre le curseur de défilement et la position de référence.

10. Dispositif électronique (100) selon la revendication 8,
dans lequel, si le curseur de défilement (840) est déplacé d'une position de référence configurée pour être sur la barre de défilement (850) en direction d'une extrémité de la barre de défilement (850), sur la base du second signal d'entrée tactile, le dispositif de commande (160) est en outre configuré pour configurer (613) la vitesse de suppression du texte positionné à gauche d'un curseur (860) à augmenter sur la base de la distance de déplacement entre le curseur de défilement (840) et la position de référence ; et
si le curseur de défilement est déplacé de la position de référence configurée pour être sur la barre de défilement (850) en direction de l'autre extrémité de la barre de défilement (850), sur la base du second signal d'entrée tactile, le dispositif de commande (160) est en outre configuré pour configurer (613) la vitesse de suppression du texte positionné à droite du curseur (860) à augmenter sur la base de la distance de déplacement entre le curseur de défilement (840) et la position de référence.
